(19) Europäisches Patentamt
European Patent Office
Office européen des brevets

(11) **EP 3 186 512 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(21) Anmeldenummer: **15766762.7**

(22) Anmeldetag: **27.08.2015**

(51) Int Cl.:
*F04C 5/00* *(2006.01)*     *F01N 3/20* *(2006.01)*
*F04B 43/12* *(2006.01)*

(86) Internationale Anmeldenummer:
**PCT/EP2015/069617**

(87) Internationale Veröffentlichungsnummer:
**WO 2016/030451 (03.03.2016 Gazette 2016/09)**

(54) **ORBITALPUMPE MIT VERSTEIFUNGSRING**

ORBITAL PUMP WITH REINFORCEMENT RING

POMPE ORBITALE AVEC ANNEAU DE RENFORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2014 DE 102014112391**

(43) Veröffentlichungstag der Anmeldung:
**05.07.2017 Patentblatt 2017/27**

(73) Patentinhaber: **Continental Automotive GmbH 30165 Hannover (DE)**

(72) Erfinder:
• **HODGSON, Jan**
  **53840 Troisdorf (DE)**
• **KOPP, Yves**
  **F-57510 Remering-les-Puttelange (FR)**
• **MAGUIN, Georges**
  **F-57155 Marly (FR)**

(56) Entgegenhaltungen:
**EP-A2- 0 819 853      DE-A1- 3 815 252**
**DE-A1-102013 101 412   US-A- 2 544 628**

**Beschreibung**

Die Erfindung betrifft eine Pumpe zur Förderung einer Flüssigkeit, die insbesondere dazu geeignet ist, ein flüssiges Abgasreinigungsadditiv (wie beispielsweise Harnstoff-Wasserlösung) in eine Abgasbehandlungsvorrichtung zur Reinigung der Abgase von Verbrennungskraftmaschinen zu fördern.

Abgasbehandlungsvorrichtungen, in denen ein flüssiges Additiv zur Abgasreinigung einsetzt wird, sind beispielsweise im Kraftfahrzeugbereich weit verbreitet. Ein flüssiges Additiv wird in Abgasbehandlungsvorrichtungen insbesondere eingesetzt, um Stickstoffoxidverbindungen aus dem Abgas zu entfernen. In derartigen Abgasbehandlungsvorrichtungen wird das sogenannte SCR-Verfahren durchgeführt (SCR = Selective Catalytic Reduction) . Bei den SCR-Verfahren werden Stickstoffoxidverbindungen im Abgas mit einem Reduktionsmittel (normalerweise Ammoniak) reduziert. Das Ammoniak wird im Kraftfahrzeug vielfach üblicherweise nicht in Reinform bevorratet, sondern in Form eines flüssigen (Abgas-)additivs, welches abgasextern (in einem dafür vorgesehenen externen Reaktor) und/oder abgasintern (in der Abgasbehandlungsvorrichtung) zu Ammoniak umgesetzt wird. Als flüssiges Additiv wird in diesem Zusammenhang bevorzugt Harnstoff-Wasser-Lösung eingesetzt. Eine Harnstoff-Wasser-Lösung mit einem Harnstoffgehalt von 32,5 % ist unter dem Handelsnamen AdBlue® erhältlich.

Das flüssige Additiv wird im Kraftfahrzeug üblicherweise in einem Tank gespeichert und mittels einer Fördereinheit der Abgasbehandlungsvorrichtung zugegeben. Eine Fördereinheit hat üblicherweise auch mindestens eine Pumpe. Weiterhin kann eine Fördereinheit unter anderem auch folgende Komponenten aufweisen: Filter, Sensor, Ventil und/oder Dosiereinheit.

Problematisch bei einer Fördereinheit für flüssiges Additiv ist, dass dieses bei niedrigen Temperaturen einfrieren kann. Eine 32, 5 %ige Harnstoff-Wasser-Lösung friert beispielsweise bei -11 °C ein. Derartig niedrige Temperaturen können bei Kraftfahrzeugen insbesondere während langer Stillstandsphasen im Winter auftreten. Beim Einfrieren des Additivs tritt eine Volumenvergrößerung auf, die die Leitungen, Kanäle und/oder Komponenten des Fördermoduls beschädigen oder sogar zerstören können. Das Einfrieren ist insbesondere für eine Pumpe problematisch, weil eine Pumpe in intensivem Kontakt mit dem flüssigen Additiv ist. Eine Zerstörung der Pumpe kann beispielsweise dadurch vermieden werden, dass die Fördereinheit beim Deaktivieren entleert wird, so dass während einer Stillstandsphase kein flüssiges Additiv in dem Fördermodul verbleibt. Eine andere Vorgehensweise zum Schutz der Pumpe ist es, in der Pumpe Maßnahmen zum Einfrierschutz bereitzustellen. Beispielsweise können die Pumpe bzw. deren Komponenten so flexibel ausgelegt werden, dass keine Beschädigung durch die Volumenausdehnung des flüssigen Additivs beim Einfrieren auftritt.

Insbesondere innerhalb der Pumpe ist es technisch sehr aufwendig, Maßnahmen zum Einfrierschutz zu gewährleisten, weil die Pumpe in intensivem Kontakt mit dem flüssigen Additiv stehen muss, um das flüssige Additiv fördern zu können. Darüber hinaus ist eine vollständige Entleerung der Pumpe oft problematisch, weil hierdurch eine Wiederaufnahme der Förderung nach einem Betriebsstopp deutlich erschwert wird.

Eine Pumpe zur Förderung von flüssigem Additiv sollte zudem möglichst kostengünstig sein und eine große Haltbarkeit aufweisen. Dies umfasst insbesondere eine hohe Zuverlässigkeit bzw. eine geringe Ausfallwahrscheinlichkeit sowie eine geringe Alterung. Der Begriff "Alterung" meint hier insbesondere eine Verschlechterung der Pumpe hinsichtlich Dosiergenauigkeit und Förderleistung infolge von Abnutzung.

Darüber hinaus ist ggf. auch eine exakte Fördermengenlieferfähigkeit bei der Pumpe wichtig. Mit einer exakten Fördermengenlieferfähigkeit bzw. mit dem analogen Begriff "Dosiergenauigkeit" ist hier insbesondere gemeint, dass die von der Pumpe tatsächlich geförderte Flüssigkeitsmenge genau von eindeutig bestimmbaren Eingangsgrößen vorgebbar ist, wobei der Begriff "Eingangsgröße" hier insbesondere die elektrische Ansteuerung des Antriebs der Pumpe (Spannungsprofil und/oder Stromprofil zum Antrieb der Pumpe, Frequenz von Stromfolgen zum Antrieb der Pumpe etc.) beschreibt. Insbesondere ist es wichtig, dass die Anzahl und/oder Relevanz von Quereinflüssen, die die Abhängigkeit der Fördermenge von den Eingangsgrößen beeinflussen, gering gehalten wird. Derartige Quereinflüsse können beispielsweise die Temperatur der Pumpe, der Druck in der Pumpe usw. sein. Wenn signifikante Quereinflüsse nicht vermeidbar sind, sollten die Auswirkungen dieser Quereinflüsse auf die Fördermenge möglichst genau berechenbar bzw. kontrollierbar sein. Die Dosiergenauigkeit einer Pumpe kann beispielsweise durch eine statistische Abweichung zwischen einer erwarteten, gewünschten Fördermenge und einer tatsächlich geförderten Fördermenge beschrieben werden. Beispielsweise hat eine Pumpe eine hohe Dosiergenauigkeit, wenn die Abweichung im Mittel weniger als 10 % beträgt. Eine Dosiergenauigkeit kann (für HWL-Fördermengen beim SCR-Verfahren) beispielsweise als gering angesehen werden, wenn diese Abweichung im Mittel mehr als 20 % beträgt. Diese Prozentwerte sind jeweils nur als Beispiel zu verstehen.

Aus den Druckschriften US 2,544,628, US 3,408,947, DE 285 39 16 A1 und DE 381 52 52 A1 ist ein Pumpentyp bekannt, der auch als Orbitalpumpe bezeichnet wird. Dieser Pumpentyp ist einerseits verhältnismäßig beständig gegenüber einer Volumenausdehnung einer Flüssigkeit beim Einfrieren, andererseits kann dieser Pumpentyp auch mit umgekehrter Förderrichtung betrieben werden, so dass eine Entleerung einer Fördereinheit mit einer solchen Pumpe einfach möglich ist. Aus der EP819853A2 ist eine weitere Orbitalpumpe bekannt, die einen Versteifungsring besitzt. Indem dieser die Membran unterstützt, bestimmt er den äußersten Druck, den die Pumpe entwickeln kann. Es besteht das Bedürfnis, diesen Pumpentyp an die Anforderungen im Umfeld des SCR-Verfahrens anzupassen, insbesondere hinsichtlich der Dosiergenauigkeit und/oder des Alterungsverhaltens sowie der Beständigkeit gegenüber Harnstoff-Wasser-Lösung und Eisdruck.

Hiervon ausgehend ist es Aufgabe der hier vorliegenden Erfindung, eine besonders vorteilhafte Pumpe zur Förderung einer Flüssigkeit vorzustellen, die die vorstehenden Probleme zumindest teilweise löst und insbesondere zur Förderung von flüssigen Additiven zur Abgasreinigung (wie Harnstoff-Wasser-Lösung) geeignet ist.

Diese Aufgabe wird gelöst mit einer Pumpe gemäß den Merkmalen des Patentanspruchs 1. Weitere vorteilhafte Ausgestaltungen der Pumpe sind in den abhängig formulierten Patentansprüchen angegeben. Es ist darauf hinzuweisen, dass die in den einzelnen Patentansprüchen erläuterten Merkmale in beliebiger, technologisch sinnvoller Weise miteinander kombinierbar sind und durch erläuternde Sachverhalte aus der Beschreibung ergänzt werden können, wobei weitere Ausführungsvarianten der Pumpe aufgezeigt werden.

Es wird eine Pumpe zur Förderung einer Flüssigkeit beschrieben, aufweisend zumindest ein Pumpengehäuse mit mindestens einem Einlass und mindestens einem Auslass, mit einer Innenumfangsfläche und einer geometrischen Achse, wobei innerhalb des Pumpengehäuses ein Exzenter angeordnet ist und der Exzenter um die geometrische Achse relativ zu dem Pumpengehäuse exzentrisch bewegbar ist, wobei in einem Pumpenspalt zwischen der Innenumfangsfläche des Pumpengehäuses und einer Außenfläche des Exzenters ein verformbares Element angeordnet ist und wobei mit dem verformbaren Element und der Innenumfangsfläche des Pumpengehäuses ein Förderkanal von dem mindestens einen Einlass zu dem mindestens einen Auslass ausgebildet ist und wobei weiter das verformbare Element von der Außenfläche des Exzenters entlang mindestens eines Abschnitts des Förderkanals derart gegen das Pumpengehäuse gedrückt wird, dass mindestens eine verschiebbare Abdichtung des Förderkanals und zumindest ein geschlossenes Pumpenvolumen in dem Förderkanal ausgebildet sind, die zur Förderung der Flüssigkeit durch eine Bewegung des Exzenters entlang des Förderkanals von dem Einlass zu dem Auslass verschiebbar sind, wobei die Pumpe einen Versteifungsring an dem verformbaren Element aufweist und wobei ein erster Wärmeausdehnungskoeffizient des Versteifungsrings kleiner ist als ein dritter Wärmeausdehnungskoeffizienten des Pumpengehäuses.

Eine Pumpe mit diesem Aufbau kann auch als Orbitalpumpe bezeichnet werden.

Die Pumpe weist eine (zentrale) geometrische Achse auf, um die herum der Exzenter gedreht werden kann. Dafür verläuft vorzugsweise entlang der Antriebsachse eine Antriebswelle, die den Exzenter mit einem (elektrisch betreibbaren) Antrieb verbindet. Der Antrieb ist vorzugsweise entlang der Achse oberhalb und/oder unterhalb des Pumpengehäuses angeordnet. Zur räumlichen Beschreibung der Pumpe und ihrer Komponenten wird im Folgenden eine radiale Richtung angenommen, die senkrecht auf der geometrischen Achse der Pumpe steht und sich ausgehend von der geometrischen Achse der Pumpe in radialer Richtung nach außen erstreckt. Ebenfalls senkrecht zu der geometrischen Achse und sowie senkrecht zur radialen Richtung und tangential zur Innenumfangsfläche des Pumpengehäuses soll eine Umfangsrichtung definiert werden. Der Förderkanal verläuft von dem Einlass und zu dem Auslass der Pumpe zumindest abschnittsweise entlang dieser Umfangsrichtung durch das Pumpengehäuse bzw. entlang der Innenumfangsfläche des Pumpengehäuses. Zur weiteren Beschreibung der Pumpe wird auch eine Mittelebene der Pumpe definiert. Diese Mittelebene ist senkrecht zu der geometrischen Achse angeordnet. In der Mittelebene liegen das Pumpengehäuse, der Exzenter, das verformbare Element und der Förderkanal.

Das Pumpengehäuse der Pumpe ist vorzugsweise nach Art eines Rings oder einer zylindrischen Kammer aufgebaut, worin der Exzenter innen (innerhalb dieses Rings bzw. in der zylindrischen Kammer) angeordnet ist. Das Pumpengehäuse kann auch als (äußerer) Stator der Pumpe angesehen werden, wobei der Exzenter als (innerer) Rotor bezeichnet wird. Im Sinne einer kinematischen Umkehr soll die Erfindung auch solche Konstruktionen erfassen, bei denen das Pumpengehäuse mit Einlass und Auslass innen liegt und der Exzenter außen umläuft, wobei sich der Pumpenspalt zwischen Außenumfangsfläche des innenliegenden Pumpengehäuses und einer Innenfläche des Exzenters befindet. Gemäß dieser Ausführungsform der Pumpe ist es möglich, dass das Pumpengehäuse einen inneren Stator bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderkanal.

Das Pumpengehäuse ist vorzugsweise aus Kunststoff. In dem Pumpengehäuse können Versteifungsstrukturen integriert sein. In einer bevorzugten Ausführungsvariante ist in einem Pumpengehäuse aus Kunststoff eine ringförmige metallische Einlage integriert, die das Pumpengehäuse versteift.

Mit dem Begriff "Exzenter" ist hier insbesondere eine kreisförmige Struktur gemeint, die exzentrisch (außermittig) zu der geometrischen Achse angeordnet ist und durch eine Drehung um die geometrische Achse herum eine exzentrische Bewegung durchführt. Zwischen dem Pumpengehäuse und dem Exzenter ist ein ringförmiger bzw. umlaufender Pumpenspalt gebildet, in dem das verformbare Element angeordnet ist. Der Förderkanal ist (innerhalb des Spalts) zwischen dem verformbaren Element und dem Pumpengehäuse angeordnet und wird von dem Pumpengehäuse und dem verformbaren Element begrenzt. Der Pumpenspalt hat mindestens eine Engstelle, die sich durch eine Drehung des Exzenters entlang des Pumpengehäuses bzw. entlang des Förderkanals verschiebt. An der Engstelle ist das verformbare Element gegen das Gehäuse gedrückt, so dass dort die verschiebbare Abdichtung gebildet ist. Der Förderkanal hat zwischen dem Pumpengehäuse und dem verformbaren Element einen für Flüssigkeit durchströmbaren Kanalquerschnitt, der beispielsweise (je nach Größe der Pumpe) an der größten Stelle zwischen 1 mm² [Quadratmillimeter] und 50 mm² betragen kann.

Der Förderkanal ist vorzugsweise ringförmig bzw. umlaufend um die Achse ausgebildet. Der Einlass und der Auslass sind in einer Förderrichtung der Pumpe vorzugsweise mit einem Winkelabstand von mehr als 270° zueinander (gemessen in der Mittelebene) angeordnet. Entgegen der Förderrichtung haben der Einlass und der Auslass damit einen Winkelabstand von weniger als 90° zueinander.

Der Exzenter ist vorzugsweise mehrteilig ausgeführt. Der Exzenter weist vorzugsweise einen inneren Exzenterbereich auf, welcher eine exzentrische Drehbewegung ausführt. Zusätzlich kann ein äußerer Lagerring vorgesehen sein, welcher den inneren Bereich umgibt. Zwischen dem inneren Bereich und dem äußeren Lagerring befindet sich vorzugsweise mindestens ein Lager. Dieses Lager kann ein Kugellager oder ein Rollenlager sein. Der innere Exzenterbereich des Exzenters führt im Betrieb eine Drehbewegung um die Achse aus. Aufgrund der exzentrischen Anordnung ergibt sich eine exzentrische Bewegung. Diese exzentrische Bewegung wird auf den äußeren Lagerring übertragen. Durch ein Lager zwischen dem inneren Exzenterbereich und einem Lagerring kann eine exzentrische Drehbewegung des inneren Exzenterbereichs in eine exzentrische Taumelbewegung des Lagerrings umgewandelt werden, ohne dass der Drehbewegungsanteil der Bewegung des inneren Bereichs mit übertragen wird. Die Tatsache, dass die Bewegung des Lagerrings keinen Drehbewegungsanteil aufweist, ermöglicht es, Schubspannungen in dem verformbaren Element und innere Reibungskräfte in der Pumpe zu reduzieren. Das verformbare Element wird durch die Bewegung des Exzenters gewalkt. An einer Kontaktfläche des Exzenters und des verformbaren Elements wirken vorzugsweise nur Druckkräfte und im Wesentlichen keine Reibungskräfte. Eine entsprechende Aufteilung des Exzenters in einen inneren Exzenterbereich und einen äußeren Lagerring ist auch möglich, wenn der Exzenter ein äußerer Rotor ist, der um ein (inneres) Pumpengehäuse herum angeordnet ist. Es ist auch möglich, dass auf den äußeren Lagerring verzichtet wird und die Rollen des Lagers unmittelbar auf bzw. an dem verformbaren Element abrollen.

Wie weiter oben bereits beschrieben wird das verformbare Element zur Ausbildung der verschiebbaren Abdichtung bereichsweise bzw. abschnittsweise gegen die Innenumfangsfläche des Pumpengehäuses gedrückt. An der Abdichtung existiert ein (linienförmiger oder flächiger) Kontakt zwischen dem verformbaren Element und der Innenumfangsfläche des Pumpengehäuses, der von der Flüssigkeit nicht durchströmt werden kann. Anders ausgedrückt liegt das verformbare Element vollständig an dem Pumpengehäuse an, so dass der Kanalquerschnitt im Bereich dieser verschiebbaren Abdichtung keine Querschnittsfläche hat. Der Förderkanal ist demnach im Bereich der verschiebbaren Abdichtung unterbrochen. Damit ist innerhalb des Förderkanals auch mindestens ein geschlossenes Pumpenvolumen gebildet. Mit einem geschlossenen Pumpenvolumen ist gemeint, dass ein zumindest einseitig (stromaufwärts oder stromabwärts entlang des Förderkanals) verschlossener Abschnitt des Förderkanals existiert. Durch eine Verschiebung der verschiebbaren Abdichtung wird auch das mindestens eine geschlossene Pumpenvolumen verschoben, so dass die Flüssigkeit, die sich in dem geschlossenen Pumpenvolumen befindet, gefördert wird. Vorzugsweise werden bei dem Betrieb der Pumpe mehrere geschlossene Pumpenvolumina von dem Einlass der Pumpe zu dem Auslass der Pumpe verschoben, um die Flüssigkeit zu fördern. Damit wird ein geschlossenes Pumpenvolumen in der Nähe des Einlasses ausgebildet (definiert zumindest einseitig verschlossen) und dann am Auslass aufgelöst (definiert zumindest einseitig wieder geöffnet) . An dem Einlass ist ein geschlossenes Pumpenvolumen (nur) einseitig stromab durch eine verschiebbare Abdichtung verschlossen und stromauf mit dem Einlass verbunden, so dass Flüssigkeit durch den Einlass in das geschlossene Pumpenvolumen einströmen kann. An dem Auslass ist das geschlossene Pumpenvolumen (nur noch) einseitig allerdings stromauf durch eine Abdichtung verschlossen und stromab mit dem Auslass verbunden, so dass die Flüssigkeit durch den Auslass aus dem geschlossenen Pumpenvolumen ausströmen kann. Dazwischen existiert (auf dem Weg des geschlossenen Pumpenvolumens von dem Einlass zu dem Auslass) eine Phase, in der das geschlossene Pumpenvolumen stromaufwärts und stromabwärts durch die mindestens eine verschiebbare Abdichtung verschlossen ist.

Das verformbare Element kann auch als verformbare Membran bezeichnet werden. Mit dem Begriff "Membran" ist hier keine zwingende Aussage darüber getroffen, ob das verformbare Element eine flächige Ausdehnung hat. Der Begriff "Membran" soll als Hinweis verstanden werden, dass es sich bei dem verformbaren Element um eine flexible Struktur handelt, die zur Förderung von Flüssigkeit verformt werden kann. Als Material für das verformbare Element bzw. die verformbare Membran wird vorzugsweise ein Elastomermaterial (beispielsweise Kautschuk oder Latex) verwendet. Zur Erhöhung der Haltbarkeit und/oder zur Herstellung und Aufrechterhaltung der Flexibilität kann das Material des verformbaren Elements Zusatzstoffe enthalten. Vorzugsweise ist das verformbare Element in alle Richtungen (in axialer Richtung, in radialer Richtung und in Umfangsrichtung) flexibel. Es ist allerdings auch möglich, dass das verformbare Element eine teilweise gerichtete Flexibilität hat. Beispielsweise kann es eine höhere Flexibilität in radialer Richtung als in Umfangsrichtung und in axialer Richtung aufweisen. Ein Verformen des verformbaren Elements in einer Richtung bedingt typischerweise auch eine Verformung in andere Richtungen. Das verformbare Element dehnt sich beispielsweise in axialer Richtung und/oder in Umfangsrichtung aus, wenn es in radialer Richtung zusammengedrückt wird.

An der Pumpe ist vorzugsweise auch eine stationäre Abdichtung vorgesehen, die eine nicht gewollte Rückströmung der Flüssigkeit von dem Auslass zu dem Einlass (entgegen der Förderrichtung) verhindert. Die stationäre Abdichtung kann ortsfest durch das Pumpengehäuse bereitgestellt werden. Die stationäre Abdichtung ist üblicherweise zwischen dem Auslass und dem Einlass positioniert. Das verformbare Element kann im Bereich der stationären Abdichtung an dem Pumpengehäuse angeklemmt oder angeklebt sein, um eine fluiddichte Abdichtung zwischen dem Pumpengehäuse und dem verformbaren Element dauerhaft zu gewährleisten. Die stationäre Abdichtung ist unabhängig von der Position des Exzenters fluiddicht und nicht verschiebbar.

Mit der Pumpe ist vorzugsweise eine Förderung von Flüssigkeit in Förderrichtung von dem Einlass zu dem Auslass möglich. Durch eine Umkehr der Drehrichtung des Exzenters ist gegebenenfalls auch eine Umkehr der Förderrichtung (anstatt vom Einlass zum Auslass, umgekehrt vom Auslass zurück zum Einlass) möglich.

Der Versteifungsring ist in das verformbare Element eingearbeitet und/oder er liegt an einer Innenumfangsfläche des verformbaren Elements unmittelbar an.

Der Wärmeausdehnungskoeffizient beschreibt die thermische Ausdehnung in Folge von Temperaturerhöhungen und hat üblicherweise die Einheit $\mu$m/mK [Mikrometer/Meter * Kelvin]. Bei einen Wärmeausdehnungskoeffizienten von 20 $\mu$m/mK bedeutet dies beispielsweise, dass ein Bauteil, welches bei einer Referenztemperatur eine Länge von 1 m hat, sich auf eine Länge von 1, 002 m ausdehnt, wenn die Temperatur um 100 Kelvin oberhalb der Referenztemperatur liegt und sich auf eine Länge von 0,998 m verkürzt, wenn die Temperatur um 100 Kelvin unterhalb der Referenztemperatur liegt. Das tatsächliche Ausdehnungsverhalten ist häufig nicht linear. Die Angaben für Wärmeausdehnungskoeffizienten sind daher regelmäßig lineare Näherungswerte für das Ausdehnungsverhalten eines Bauteils in unmittelbarer Umgebung zu einer Referenztemperatur. Für die folgenden Erläuterungen werden ein erster Wärmeausdehnungskoeffizient für den Versteifungsring, ein zweiter Wärmeausdehnungskoeffizient für das verformbare Element, bzw. für ein Abdichtelement des verformbaren Elements und ein dritter Wärmeausdehnungskoeffizient für das Pumpengehäuse definiert.

Dadurch, dass der erste Wärmeausdehnungskoeffizient des Versteifungsrings kleiner ist als ein dritter Wärmeausdehnungskoeffizient des Pumpengehäuses, vergrößert sich ein Spalt zwischen dem Versteifungsring und dem Pumpengehäuse im Fall von erhöhten Temperaturen. Hierdurch ist es möglich, eine temperaturabhängige Ausdehnung des verformbaren Elements in dem Pumpenspalt zu kompensieren. Der ermöglicht es, die Dosiergenauigkeit der Pumpe bei unterschiedlichen Temperaturen zu erhöhen.

Bevorzugt ist die Pumpe, wenn der (erste) Wärmeausdehnungskoeffizient des Versteifungsrings weniger als 66 % des (dritten) Wärmeausdehnungskoeffizienten des Pumpengehäuses, insbesondere zwischen 20 % und 50 % des Wärmeausdehnungskoeffizienten des Pumpengehäuses, beträgt.

Es hat sich herausgestellt, dass ein derart geringerer Wärmeausdehnungskoeffizient des Versteifungsrings dazu geeignet ist, eine Wärmeausdehnung des verformbaren Elements zu kompensieren. In diesem Zusammenhang ist zu berücksichtigen, dass die Wärmeausdehnung bzw. der Wärmeausdehnungskoeffizient des verformbaren Elements regelmäßig größer ist als die Wärmeausdehnungskoeffizienten eines Pumpengehäuses. Eine Ursache hierfür ist die Tatsache, dass für das verformbare Element flexible Materialien verwendet werden. Solche Materialien haben üblicherweise höhere Wärmeausdehnungskoeffizienten als feste Materialien, die für das Gehäuse verwendet werden. (Zweite) Wärmeausdehnungskoeffizienten von Materialien des verformbaren Elements liegen üblicherweise bei mehr als 100 $\mu$m/mK. Wärmeausdehnungskoeffizienten von Materialien für das Pumpengehäuse sind üblicherweise kleiner als 50 $\mu$m/mK.

Besonders bevorzugt ist die Pumpe, wenn das Pumpengehäuse aus einem Kunststoffmaterial und der Versteifungsring aus einem metallischen Werkstoff bestehen.

Wie weiter oben bereits ausgeführt wurde, dient der geringere Wärmeausdehnungskoeffizient des Versteifungsrings gegenüber dem Pumpengehäuse dazu, den hohen Wärmeausdehnungskoeffizienten des verformbaren Elements bzw. des Abdichtelements auszugleichen. Metallische Werkstoffe haben üblicherweise geringere Wärmeausdehnungskoeffizienten als Kunststoffmaterialien. Daher ist es vorteilhaft, den Versteifungsring aus einem metallischen Werkstoff auszuführen. Gleichzeitig ist es vorteilhaft, das Pumpengehäuse aus einem Kunststoffmaterial auszuführen. Dies reduziert die Kosten für die Fertigung des Pumpengehäuses. Der Versteifungsring kann beispielsweise aus Stahl gefertigt sein. Der Versteifungsring hat vorzugsweise einen (ersten) Wärmeausdehnungskoeffizienten von weniger als 30 $\mu$m/mK.

Außerdem vorteilhaft ist die Pumpe, wenn der Versteifungsring in das verformbare Element integriert ist und wobei das verformbare Element außen an dem Versteifungsring ein ringförmiges flexibles Abdichtelement und innen an dem Versteifungsring ein ringförmiges elastisches Kompensationselement aufweist.

Das flexible Abdichtelement und der Versteifungsring bilden dann Abschnitte des verformbaren Elements, die von dem Versteifungsring zumindest bereichsweise separiert sind. Das ringförmige flexible Abdichtelement übernimmt zusammen mit dem Pumpengehäuse die Ausbildung des Förderwegs von dem Einlass zu dem Auslass. Das ringförmige elastische Kompensationselement bietet eine flexible Anbindung des verformbaren Elements an den Exzenter. Insbesondere besteht keine direkte Anlage des Versteifungsrings an den Exzenter, so dass der Versteifungsring und der Exzenter sich relativ zueinander bewegen können. Das elastische Kompensationselement dient zur Kraftübertragung von dem Exzenter auf den Versteifungsring und das flexible Abdichtelement. So können beispielsweise auch Fertigungstoleranzen oder Druckschwankungen innerhalb der Pumpe ausgeglichen werden.

Darüber hinaus bildet ein verformbares Element, bestehend aus Versteifungsring, flexiblem Abdichtelement und elastischem Kompensationselement, ein Bauteil, welches sämtliche für die Dosiergenauigkeit einer Pumpe entscheidenden Eigenschaften in sich vereint und beispielsweise auch als Austauschbauteil bei einer Wartung der Pumpe gewechselt werden kann.

Das ringförmige flexible Abdichtelement und das ringförmige elastische Kompensationselement sind an dem Versteifungsring des verformbaren Elements vorzugsweise angespritzt oder angegossen. In einer weiteren Ausführungsvariante ist der Versteifungsring in das verformbare Element eingegossen und unterteilt das verformbare Element in Abdichtelement und flexibles Kompensationselement. Außerdem ist es möglich, dass der Versteifungsring vollständig von dem Material des flexiblen Abdichtelements und des elastischen Kompensationselements umgeben ist.

Das elastische Kompensationselement erzeugt insbesondere auch einen Wärmeausdehnungsausgleich zwischen dem Versteifungsring und dem Exzenter. Insbesondere in dem Fall, dass der Exzenter einen höheren Wärmeausdehnungskoeffizienten hat als der Versteifungsring, wird ein Spalt zwischen dem Versteifungsring und dem Exzenter kleiner, wenn die Pumpe höheren Temperaturen ausgesetzt ist. Das elastische Kompensationselement ermöglicht dann eine im Wesentlichen freie Wärmeausdehnung des Versteifungsrings. Insbesondere entsteht keine Kraft, die den Versteifungsring ausgehend von innen dehnt und so einen Spalt zwischen Versteifungsring und Pumpengehäuse wieder verkleinert.

Weiter oben ist das Material des verformbaren Elements als Kautschukmaterial oder einen kautschukähnlichen Material beschrieben, das beispielsweise einen Wärmeausdehnungskoeffizienten von mehr als 100 $\mu$m/mK hat. Diese Materialangabe bezieht sich immer nur auf das verformbare Element ohne integrierten Versteifungsring. Wenn ein Versteifungsring in das verformbare Element integriert ist, hat der Verbund aus Versteifungsring und weiteren Abschnitten des verformbaren Elements regelmäßig einen erheblich geringeren Wärmeausdehnungskoeffizienten, weil der Versteifungsring eine Wärmeausdehnung des verformbaren Elements verhindert.

In einer weiteren Ausführungsvariante bildet das verformbare Element ein verformbares Abdichtelement, an welchem der Versteifungsring innen anliegt, wobei zwischen dem Versteifungsring und dem Exzenter ein elastisches Kompensationselement angeordnet ist.

Hier ist eine alternative Ausführungsvariante beschrieben, bei der Abdichtelement, Versteifungsring und Kompensationselement kein integriertes Bauteil bilden. Es ist aber trotzdem möglich, dass der Versteifungsring mit dem Kompensationselement und/oder der Versteifungsring mit dem Abdichtelement verbunden sind.

Weiterhin vorteilhaft ist die Pumpe, wenn das Abdichtelement einen ersten Elastizitätsmodul und das Kompensationselement einen zweiten Elastizitätsmodul hat, wobei der zweite Elastizitätsmodul mindestens doppelt so groß ist wie der erste Elastizitätsmodul.

Der Elastizitätsmodul beschreibt die Steifigkeit eines Werkstoffs und hat die Einheit kN/mm$^2$ [Kilonewton pro Quadratmillimeter]. Ein Bauteil mit hohem Elastizitätsmodul bzw. mit hoher Steifigkeit kann auch als "fest", "steif" oder "starr" bezeichnet werden. Ein Bauteil mit geringem Elastizitätsmodul bzw. mit geringer Steifigkeit wird auch als "flexibel" oder "elastisch" bezeichnet. Die Eigenschaft eines Bauteils, einen geringen Elastizitätsmodul bzw. eine geringe Steifigkeit zu haben, wird auch als "Elastizität" bezeichnet. Das Abdichtelement hat vorzugsweise einen ersten Elastizitätsmodul zwischen 0,005 kN/mm$^2$ und 0,2 kN/mm$^2$. Das elastische Kompensationselement hat vorzugsweise einen zweiten Elastizitätsmodul von 0,1 kN/mm$^2$ bis 5 kN/mm$^2$. Der zweite Elastizitätsmodul des elastischen Kompensationselements ist somit zwar deutlich größer als der erste Elastizitätsmodul des Abdichtelements, trotzdem ist der zweite Elastizitätsmodul absolut betrachtet noch relativ niedrig, so dass das Kompensationselement als "elastisch" bezeichnet werden kann.

Durch die Elastizität des elastischen Kompensationselements werden insbesondere Fertigungstoleranzen der Pumpe kompensiert. Je genauer die Pumpe gefertigt ist, größer kann der zweite Elastizitätsmodul sein. Durch einen hohen zweiten Elastizitätsmodul wird die innere Reibung innerhalb des elastischen Kompensationselements reduziert, weil ein hoher Elastizitätsmodul die in dem elastischen Kompensationselement auftretenden Verformungen reduziert. Daher ist es vorteilhaft, ein steiferes Kompensationselement mit einem höheren zweiten Elastizitätsmodul (der größer ist als ein erster Elastizitätsmodul des Abdichtelements) vorzusehen. Hierdurch ist einerseits eine Toleranz der Pumpe gegenüber Fertigungsungenauigkeit gegeben, andererseits ist die innere Reibung beim Betrieb der Pumpe wesentlich geringer als wenn ein Kompensationselement mit einem geringeren Elastizitätsmodul verwendet wird.

Außerdem vorteilhaft ist die Pumpe, wenn der Versteifungsring einen dritten Elastizitätsmodul hat, der mindestens doppelt so groß ist wie ein zweiter Elastizitätsmodul eines Kompensationselementes zwischen dem Versteifungsring und dem Exzenter.

Wie weiter oben beschrieben, liegt der zweite Elastizitätsmodul des Kompensationselements vorzugsweise im Bereich von 0,1 kN/mm² bis 5 kN/mm². Der dritte Elastizitätsmodul ist vorzugsweise größer als 50 kN/mm², bevorzugt sogar größer als 100 kN/mm² und ganz besonders bevorzugt sogar größer als 200 kN/mm². Hohe Elastizitätsmodule können beispielsweise durch die Verwendung von metallischen Werkstoffen (insbesondere Stahl) für den Versteifungsring realisiert werden.

Der im Verhältnis zum dritten Elastizitätsmodul des Versteifungsrings erheblich geringere zweite Elastizitätsmodul des elastischen Kompensationselements ermöglicht es, den Versteifungsring hinsichtlich des thermischen Ausdehnungsverhaltens von dem Exzenter zu entkoppeln. Der Versteifungsring selbst hat einen geringen thermischen Ausdehnungskoeffizienten und dehnt sich daher selbst thermisch nur wenig aus. Die innerhalb des Versteifungsrings angeordneten Bauteile (elastisches Kompensationselement, Exzenter etc). könnten den Versteifungsring allerdings von innen dehnen, wenn diese Bauteile ihrerseits eine hohe thermische Ausdehnung hätten. Um dies zu verhindern ist ein elastisches Kompensationselement mit einem geringen (dritten) Elastizitätsmodul vorteilhaft, weil thermische Ausdehnungen dieses Kompensationselements und des Exzenters dann nur relativ geringe Kräfte erzeugen, die von innen auf den Versteifungsring wirken. So kann mit dem Versteifungsring das Ausdehnungsverhalten von sämtlichen (inneren) Bauteilen der Pumpe (insbesondere des Exzenters) wirkungsvoll kontrolliert werden.

Weiterhin vorteilhaft ist die Pumpe, wenn die Pumpe so ausgelegt ist, dass eine Stauchung des verformbaren Elements im Bereich der verschiebbaren Abdichtung maximal 5 % einer Elementdicke des verformbaren Elements entspricht.

Die Elementdicke beschreibt hierbei die Dicke des verformbaren Elements in radialer Richtung im nicht verformten Zustand. Die Stauchung des verformbaren Elements beschreibt eine Verformung des verformbaren Elements in radialer Richtung. Bei einer Stauchung von 5 % ist die Dicke des verformbaren Elements auf 95 % der Elementdicke (im nicht verformten Zustand) reduziert.

Die Stauchung im Bereich des verformbaren Elements steht im Zusammenhang mit mechanischen Kräften, die an der verschiebbaren Abdichtung an dem Kontakt zwischen verformbaren Element und Innenumfangsfläche des Pumpengehäuses auftreten. Durch diese mechanischen Kräfte entsteht die Dichtwirkung an der verschiebbaren Abdichtung zwischen den einzelnen Pumpenvolumina in dem Förderweg. Je steifer das verformbare Element ist, umso geringer ist die Verformung, die im Bereich der verschiebbaren Abdichtung notwendig ist, um für die Dichtwirkung ausreichende mechanische Kräfte zu gewährleisten. Gleichzeitig sinkt mit einer geringeren Abdichtelementstauchung auch die innere Reibung beim Betrieb der Pumpe. Es hat sich herausgestellt, dass es besonders vorteilhaft ist, die Pumpe so auszulegen, dass eine maximale Abdichtelementstauchung von 5 % bzw. weniger als 5 % erfolgt. Dann existiert einerseits eine ausreichende Abdichtung, andererseits ist die innere Reibung beim Betrieb der Pumpe gering und die Pumpe arbeitet effizient.

Weiterhin vorteilhaft ist die Pumpe, wenn die verschiebbare Abdichtung an der Innenumfangsfläche des Pumpengehäuses in einem Abdichtwinkel um die geometrische Achse anliegt, wobei der Abdichtwinkel mindestens 90° beträgt.

Der Abdichtwinkel beschreibt Erstreckung der Abdichtung in Umfangsrichtung. Im Bereich des Abdichtwinkels liegt das verformbare Element an der Innenumfangsfläche des Pumpengehäuses an.

Durch einen derart großen Abdichtwinkel wird insbesondere ermöglicht, dass beim Betrieb der Pumpe bei jeder Umdrehung des Exzenters zumindest zeitweise sowohl der Einlass als auch der Auslass der Pumpe von der verschiebbaren Abdichtung verschlossen ist. Dies verhindert insbesondere eine nicht gewünschte Rückströmung von Flüssigkeit von dem Auslass zurück zu dem Einlass und ermöglicht außerdem eine besonders gleichmäßige Förderung von Flüssigkeit mit der Pumpe.

Außerdem vorteilhaft ist die Pumpe, wenn der Versteifungsring einen ersten Wärmeausdehnungskoeffizienten $\lambda_1$ und einen ersten Außendurchmesser $D_1$, das verformbare Element einen zweiten Wärmeausdehnungskoeffizienten $\lambda_2$ und einen zweiten Außendurchmesser $D_2$ und das Pumpengehäuse einen Gehäusedurchmesser $D_3$ und einen dritten Wärmeausdehnungskoeffizienten $\lambda_3$ aufweisen, wobei der erste Außendurchmesser $D_1$ des Versteifungsrings nach folgender Formel ausgelegt ist:

$$D_1 = \frac{D_3 \times \lambda_3 - D_2 \times \lambda_2}{\lambda_1 - \lambda_2}$$

Wenn diese Formel zur Auslegung des Durchmessers des Versteifungsrings angewendet wird, ist eine vollständige Kompensation der Wärmeausdehnung des verformbaren Elements durch den Versteifungsring möglich, so dass eine temperaturunabhängige Auslegung der Pumpe gewährleistet ist. In diesem Zusammenhang ist es besonders vorteilhaft, wenn zwischen dem Exzenter und dem Versteifungsring ein elastisches Kompensationselement angeordnet ist, welches einen dritten Elastizitätsmodul hat, der deutlich geringer ist als ein zweiter Elastizitätsmodul des Versteifungsrings. Ein solches Kompensationselement ermöglicht es, den Versteifungsring hinsichtlich des Wärmeausdehnungsverhaltens von dem Exzenter zu entkoppeln. Insbesondere wird verhindert, dass die Wärmeausdehnung des Exzenters den Versteifungsring von innen (indirekt) dehnt. In einer weiteren Variante ist auch eine Auslegung des Wärmeausdehnungskoeffizienten $\lambda_1$ des Versteifungsrings gemäß der oben angegebenen Formel möglich, die dazu entsprechend umgeformt werden kann.

Weiterhin vorteilhaft ist die Pumpe, wenn das verformbare Element in axialer Richtung beidseitig des Exzenters jeweils von einem Zentrierungsring an der Innenumfangsfläche des Pumpengehäuses abgestützt und so gegen das Pumpengehäuse gedrückt wird, dass jeweils ein ringförmiger Abdichtkontakt gebildet ist.

Vorzugsweise sind die Zentrierungsringe in axialer Richtung beidseitig des Versteifungsrings an dem verformbaren Element befestigt oder sogar (entsprechend zu dem Versteifungsring) in das verformbare Element integriert. Die Zentrierungsringe quetschen das verformbare Element entlang des Förderkanals vollumfänglich an das Pumpengehäuse an und bilden so eine radiale Abdichtung des Förderkanals beidseitig des Förderkanals aus. Der Durchmesser der Zentrierungsringe ist vorzugsweise etwas größer als der Durchmesser des Versteifungsrings. Besonders bevorzugt sind die Zentrierungsringe relativ zum Pumpengehäuse im Wesentlichen festliegend, so dass keine oder nur sehr geringfügige Relativbewegungen zwischen dem Pumpengehäuse und den Zentrierungsringen auftreten.

Hier auch beschrieben werden soll ein Kraftfahrzeug, aufweisend eine Verbrennungskraftmaschine, eine Abgasbehandlungsvorrichtung zur Reinigung der Abgase der Verbrennungskraftmaschine mit einem SCR-Katalysator, mit dem das SCR-Verfahren durchgeführt werden kann, wobei dem SCR-Katalysator eine Flüssigkeit (insbesondere ein flüssiges Additiv zur Abgasreinigung, beispielsweise Harnstoff-Wasser-Lösung) mit einer beschriebenen Pumpe zugeführt werden kann.

Die Erfindung sowie das technische Umfeld werden nachfolgend anhand der Figuren näher erläutert. Es ist darauf hinzuweisen, dass die Figuren nur schematisch sind und jeweils nur bevorzugte Ausführungsbeispiele der Erfindung zeigen. Insbesondere die in den Figuren dargestellten Größenverhältnisse sind nur schematisch zu verstehen. Es zeigen:

Fig. 1: eine isometrische Ansicht einer beschriebenen Pumpe,

Fig. 2: einen Schnitt durch eine beschriebene Pumpe,

Fig. 3: einen weiteren Schnitt durch eine beschriebene Pumpe entlang der in Fig. 2 dargestellten Schnittrichtung B-B;

Fig. 4: einen weiteren Schnitt durch eine beschriebene Pumpe entlang der in der Fig. 2 dargestellten Schnittrichtung A-A,

Fig. 5: eine schematische Darstellung des verformbaren Elements einer beschriebenen Pumpe zusammen mit dem Exzenter,

Fig. 6: eine isometrische Darstellung eines verformbaren Elements einer beschriebenen Pumpe,

Fig. 7: eine isometrische Schnittdarstellung durch das verformbare Element aus Fig. 6; und

Fig. 8: ein Kraftfahrzeug mit einer beschriebenen Pumpe.

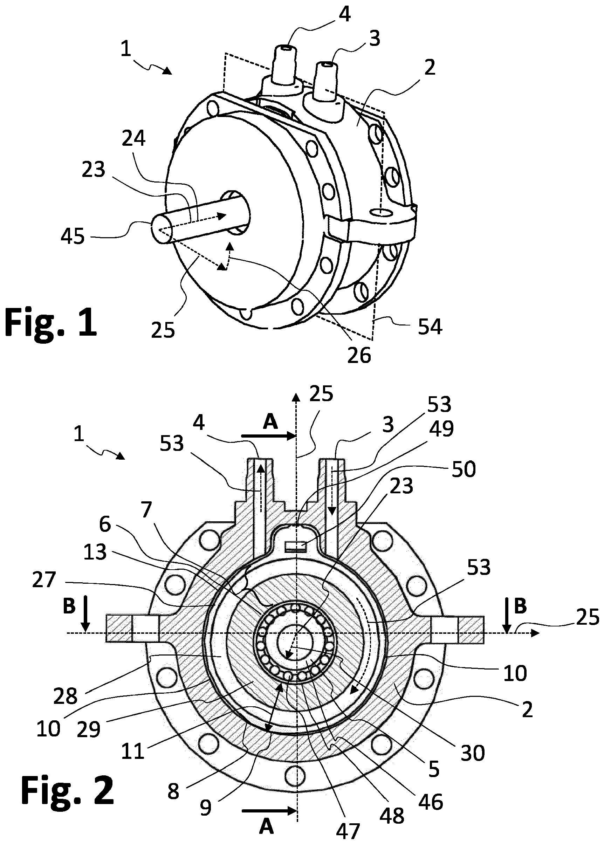

In Fig. 1 ist die beschriebene Pumpe 1 in einer isometrischen Ansicht von außen dargestellt. Zu erkennen sind das Pumpengehäuse 2 mit dem Einlass 3 und dem Auslass 4. Weiter zu erkennen ist eine Antriebsachse 45, über die der hier nicht dargestellte Exzenter in dem Pumpengehäuse 2 angetrieben werden kann. Entlang der Antriebsachse 45 sind eine axiale Richtung 24 und eine geometrische Achse 23 der Pumpe 1 definiert. Darüber hinaus sind eine senkrecht auf der axialen Richtung 24 und der geometrischen Achse 23 stehende radiale Richtung 25 sowie eine tangentiale Umfangsrichtung 26 senkrecht zu der axialen Richtung 24 und der geometrischen Achse 23 definiert. Das Koordinatensystem aus axialer Richtung 24, radialer Richtung 25 und Umfangsrichtung 26 wird im Folgenden zur räumlichen Beschreibung der Pumpe verwendet . Fig. 1 deutet darüber hinaus eine Mittelebene 54 der Pumpe 1 an.

Fig. 2 zeigt einen Schnitt durch die in Fig. 1 dargestellte Pumpe 1 senkrecht zur radialen Richtung 24 aus Fig. 1 in der Mittelebene 54 der Pumpe 1. Es ist zu erkennen, dass die Mittelebene 54 das Pumpengehäuse 2 in der Ebene schneidet, in der auch der Einlass 3 und der Auslass 4 liegen. Zur Orientierung sind hier zwei verschiedene radiale Richtungen 25 dargestellt, die senkrecht aufeinander stehen, wobei diese radialen Richtungen 25 anhand des Einlasses 3 und des Auslasses 4 der Pumpe 1 ausgerichtet sind. In dem Pumpengehäuse 2 befindet sich der Exzenter 5. Der Exzenter 5 hat einen inneren Exzenterbereich 46 mit einer Exzentrizität 30, einem Exzenterlager 47 und einem äußeren Ring 48. Zwischen einer Außenfläche 6 des Exzenters 5 und einer Innenumfangsfläche 13 des Pumpengehäuses 2 befindet sich ein Pumpenspalt 11, in welchem das verformbare Element 7 angeordnet ist. Das verformbare Element 7 weist einen Versteifungsring 28, ein außen am Versteifungsring 28 anliegendes Abdichtelement 27 sowie ein innen liegendes elastisches Kompensationselement 29 auf. Zwischen dem verformbaren Element 7 und dem Pumpengehäuse 2 bzw. zwischen dem Abdichtelement 27 des verformbaren Elements 7 und dem Pumpengehäuse 2 befindet sich ein Förderkanal 8, der den Einlass 3 mit dem Auslass 4 verbindet und durch welchen die Flüssigkeit durch eine Bewegung des Exzenters 5 entlang der Förderrichtung 53 gefördert werden kann. Dazu liegt das verformbare Element 7 an einer verschiebbaren Abdichtung 9 an der Innenumfangsfläche 13 des Pumpengehäuses 2 an und unterteilt den Förderkanal 8 in verschiebbare Pumpenvolumina 10.

Zwischen dem Einlass 3 und dem Auslass 4 ist eine stationäre Abdichtung 49 ausgebildet, die unabhängig von der Position des Exzenters 5, eine fluiddichte Anlage zwischen dem Pumpengehäuse 2 und dem verformbaren Element 7 gewährleistet und so eine Rückströmung von Flüssigkeit von dem Auslass 4 zum Einlass 3 entgegen der Förderrichtung 53 verhindert. Die stationäre Abdichtung 49 ist dadurch ausgebildet, dass das verformbare Element 7 im Bereich der stationären Abdichtung 49 mit einem Stift 50 fest gegen das Pumpengehäuse 2 verspannt ist.

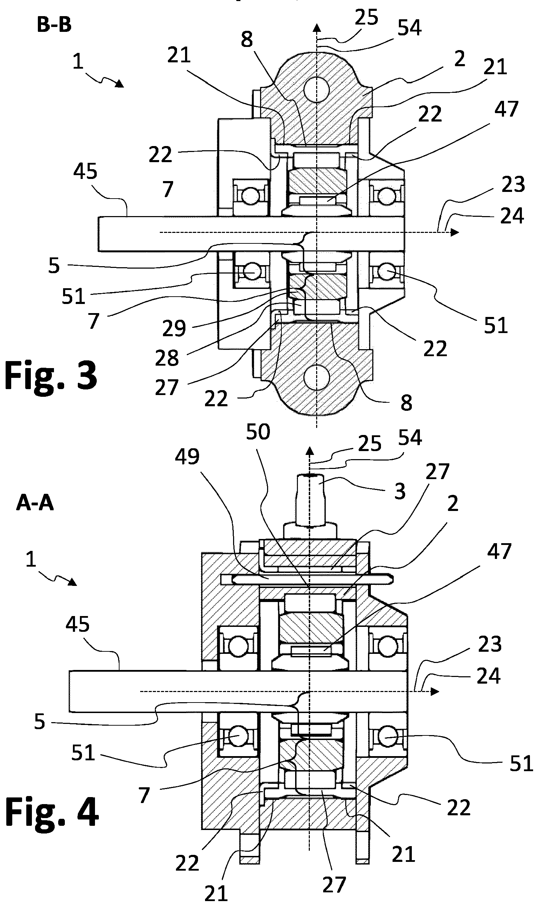

Fig. 3 zeigt einen Schnitt durch die Pumpe 1 entlang der in Fig. 2 dargestellten Schnittrichtung B-B. Zur Orientierung sind hier die radiale Richtung 25, die axiale Richtung 24, die Mittelebene 54 und die geometrische Achse 23 der Pumpe dargestellt. Entlang der axialen Richtung verläuft auch die Antriebsachse 45 der Pumpe 1. Zu erkennen ist das Pumpengehäuse 2 mit dem darin angeordneten Exzenter 5, aufweisend inneren Exzenterbereich 46, äußeren Ring 48 und dazwischen angeordnetes Exzenterlager 47. Zu erkennen sind außerdem das Abdichtelement 27, der Versteifungsring 28 und das Kompensationselement 29 des verformbaren Elements 7. Die Antriebsachse 45 ist in axialer Richtung 24 beidseitig des verformbaren Elements 7 jeweils mit einem Achsenlager 51 gelagert. In axialer Richtung 24 wird das verformbare Element 7 darüber hinaus beidseitig von Zentrierungsringen 22 unterstützt, welche das verformbare Element 7 jeweils mit einem ringförmigen Abdichtkontakt 21 an das Pumpengehäuse 2 andrücken. So ist zwischen dem Pumpengehäuse 2 und dem verformbaren Element 7 bzw. zwischen dem Pumpengehäuse 2 und dem Abdichtelement 27 des verformbaren Elements 7 der Förderkanal 8 ausgebildet, der (in axialer Richtung 24) beidseitig von ringförmigen Abdichtkontakten 21 begrenzt wird.

Fig. 4 zeigt einen Schnitt durch die Pumpe 1 entlang der in Fig. 2 dargestellten Schnittrichtung A-A, wobei dieser Schnitt im Wesentlichen dem in Fig. 2 dargestellten Schnitt entspricht. Die Schnittrichtung A-A ist allerdings so festgelegt, dass im oberen Bereich die stationäre Abdichtung 49 angeschnitten ist. Zu erkennen sind das verformbare Element 7 bzw. das Abdichtelement 27 des verformbaren Elements 7 an der stationären Abdichtung, wobei ein Stift 50 das verformbare Element 7 bzw. das Abdichtelement 27 gegen das Pumpengehäuse 2 drückt.

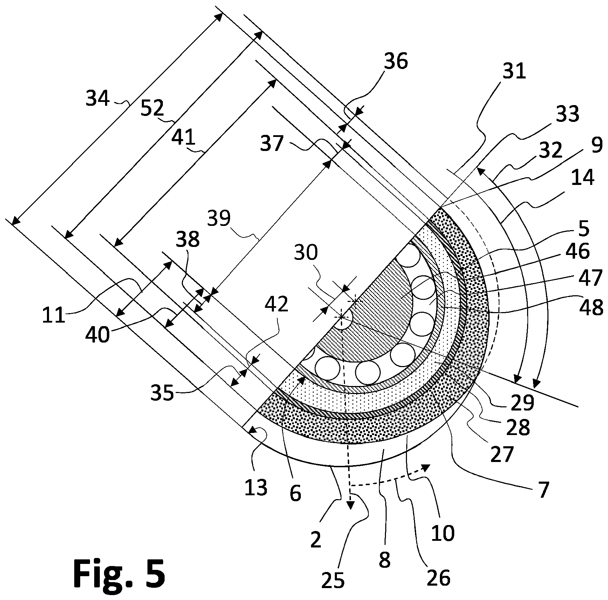

Fig. 5 zeigt eine schematische Darstellung des verformbaren Elements 7 und des Exzenters 5 der Pumpe. Zum besseren Verständnis der Maße der einzelnen Komponenten des Exzenters 5 und des verformbaren Elements 7 ist hier die Hälfte der Pumpe dargestellt. Zur Orientierung sind in der Fig. 5 die radiale Richtung 25 und die Umfangsrichtung 26 aufgetragen.

Zu erkennen ist das verformbare Element 7 mit dem Versteifungsring 28, dem äußeren Abdichtelement 27 und dem inneren Kompensationselement 29. Zu erkennen ist außerdem der Exzenter 5 mit dem inneren Exzenterbereich 46, dem Exzenterlager 47 und dem äußeren Ring 48 sowie der Außenfläche 6. Der Exzenter 5 hat eine Exzentrizität 30. Die Außenfläche 6 des Exzenters 5 ist darüber hinaus vorzugsweise kreisförmig und hat einen Exzenterdurchmesser 39. Schematisch dargestellt ist hier auch das Pumpengehäuse 2, welches eine Innenumfangsfläche 13 aufweist. Zwischen der Außenfläche 6 und der Innenumfangsfläche 13 ist der Pumpenspalt 11 ausgebildet, in welchem sich das verformbare Element 7 und der Förderkanal 8 befinden.

Der Förderkanal 8 ist an einer verschiebbaren Abdichtung 9 in zumindest ein verschiebbares Pumpenvolumen 10 unterteilt, wobei die verschiebbare Abdichtung 9 dadurch ausgebildet ist, dass das verformbare Element 7 unmittelbar an der Innenumfangsfläche 13 des Pumpengehäuses 2 anliegt. Im oberen Bereich der Fig. 5 ist die verschiebbare Abdichtung 9 mittig angeschnitten, während im unteren Bereich der Fig. 5 das verschiebbare Pumpenvolumen 10 angeschnitten ist. Die verschiebbare Abdichtung 9 erstreckt sich über einen Abdichtwinkel 31. Um die Ausdehnung der verschiebbaren Abdichtung 9 in der hier gewählten schematischen Darstellung ausreichend zu verdeutlichen, sind hier eine Abdichtposition 33, ein halber Abdichtwinkel 32 sowie der vollständige Abdichtwinkel 31 dargestellt. Die Abdichtposition 33 definiert (in Umfangsrichtung 26) genau die Mitte der verschiebbaren Abdichtung 9. Hiervon ausgehend erstreckt sich die verschiebbare Abdichtung 9 in Umfangsrichtung beidseitig jeweils über einen halben Abdichtwinkel 32 und überspannt so insgesamt den Abdichtwinkel 31.

Das verformbare Element 7 hat eine Elementdicke 40, die zusammengesetzt ist aus einer Ringdicke 42 des Versteifungsrings 28, einer Abdichtelementdicke 35 des Abdichtelements 27 sowie einer Kompensationselementdicke 37, 38 des Kompensationselements 29. Durch die an der Abdichtung 9 wirkenden Druckkräfte auf das verformbare Element 7 verschiebt sich der Versteifungsring 28 relativ zu dem Exzenter 5. Diese relative Verschiebung wirkt sich vor allem in dem Kompensationselement aus, so dass an der Abdichtung 9 eine minimale Kompensationselementdicke 37 und gegenüberliegend zur Abdichtung 9 eine maximale Kompensationselementdicke 38 auftreten. Zusätzlich tritt an der verschiebbaren Abdichtung 9 eine Stauchung 36 des verformbaren Elements 7 auf, die vorzugsweise maximal 5 % der Elementdicke 40 des verformbaren Elements entspricht.

Der Versteifungsring 28 hat einen ersten Außendurchmesser 41. Das verformbare Element 7 hat einen zweiten Außendurchmesser 52. Das Pumpengehäuse 2 bzw. die Innenumfangsfläche 13 des Pumpengehäuses 2 hat einen dritten Durchmesser 34. Durch eine geeignete Abstimmung der Wärmeausdehnungskoeffizienten von Pumpengehäuse 2, Versteifungsring 28 und verformbarem Element 7 bzw. Abdichtelement 27 des verformbaren Elements 7 sowie durch eine geeignete Abstimmung der jeweiligen Durchmesser 34, 52 und 41, kann erreicht werden, dass die Pumpe weitgehend unabhängig von der vorliegenden Temperatur eine vorgegebene Menge an Flüssigkeit fördern kann.

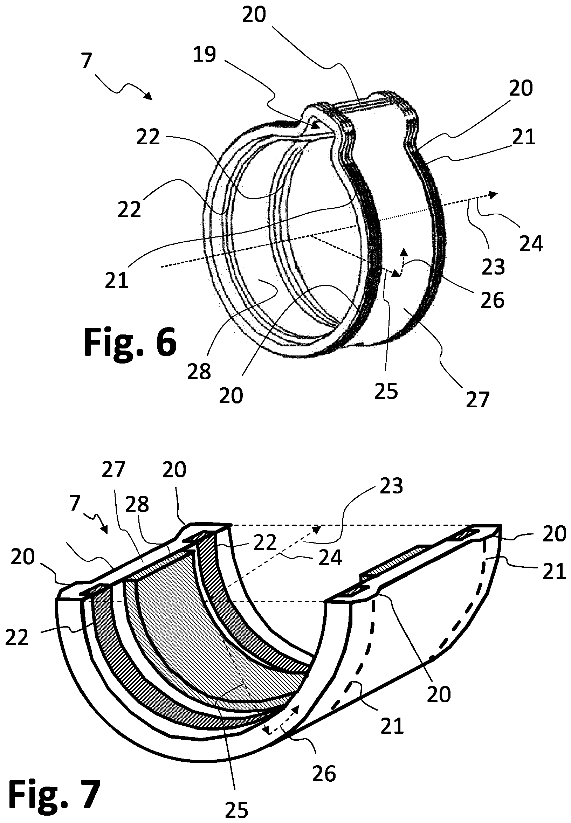

Fig. 6 zeigt eine isometrische Ansicht eines verformbaren Elements 7 für die beschriebene Pumpe. Zur Orientierung sind hier die geometrische Achse 23, die axiale Richtung 24, die radiale Richtung 25 und die Umfangsrichtung 26 dargestellt. Das verformbare Element 7 hat ein äußeres Abdichtelement 27 sowie einen Versteifungsring 28. Hier nicht dargestellt ist ein Kompensationselement 29, welches sich innen von dem Versteifungsring 28 befinden kann. An dem Abdichtelement 27 des verformbaren Elements 7 sind Dichtlippen 20 ausgebildet, mit welchen das verformbare Element 7 an dem Pumpengehäuse der Pumpe fluiddicht anliegt, so dass ringförmige Abdichtkontakte 21 zwischen dem Pumpengehäuse und dem verformbaren Element 7 gebildet werden, um den Förderkanal zu begrenzen. Zur Ausbildung der stationären Abdichtung und zur Aufnahme eines Pins für die Ausbildung der stationären Abdichtung weist das verformbare Element 7 eine Ausbuchtung 19 auf, in welche der Stift zur Ausbildung der stationären Abdichtung eingelegt werden kann. In axialer Richtung 24 beidseitig des Versteifungsrings 28 sind an dem verformbaren Element auch Zentrierungsringe 22 ausgebildet, mit welchen die Dichtlippen 20 des verformbaren Elements 7 gegen das Pumpengehäuse der Pumpe gedrückt werden können, um die ringförmigen Abdichtkontakte 21 auszubilden.

Zum besseren Verständnis ist das in Fig. 6 dargestellte verformbare Element 7 in Fig. 7 noch einmal in einem Schnitt dargestellt. Zur Orientierung sind hier auch die geometrische Achse 23, die axiale Richtung 24, die radiale Richtung 25 und die Umfangsrichtung 26 eingetragen. Zu erkennen sind das äußere Abdichtelement 27 und der Versteifungsring 28 des verformbaren Elements 7 sowie die Zentrierungsringe 22, die in axialer Richtung 24 beidseitig des Versteifungsrings 28 angeordnet sind. Jeweils angedeutet sind die Dichtlippen 20 des verformbaren Elements sowie gestrichelt die ringförmigen Abdichtkontakte 21, mit welchem die Dichtlippen 20 an dem Pumpengehäuse 2 fluiddicht anliegen.

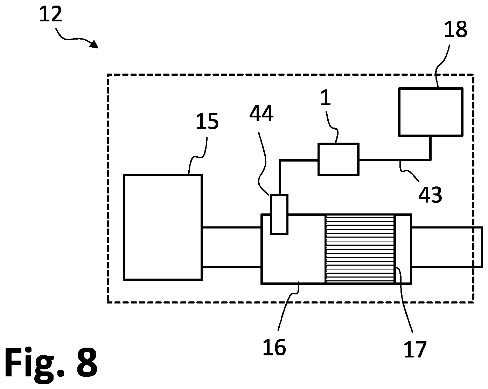

Fig. 8 zeigt ein Kraftfahrzeug 12, aufweisend eine Verbrennungskraftmaschine 15 sowie eine Abgasbehandlungsvorrichtung 16 zur Reinigung der Abgase der Verbrennungskraftmaschine 15. In der Abgasbehandlungsvorrichtung 16 ist ein SCR- Katalysator 17 angeordnet, mit welchem das Verfahren der selektiven katalytischen Reduktion durchgeführt werden kann. Dafür wird mit einer Injektor 44 flüssiges Additiv zur Abgasreinigung zu der Abgasbehandlungsvorrichtung 16 zugeführt. Das flüssige Additiv wird von einer vorstehend beschriebenen Pumpe 1 über eine Leitung 43 aus einem Tank 18 zu dem Injektor 44 gefördert.

Durch die beschriebene Erfindung wird eine Orbitalpumpe zur Bereitstellung von flüssigem Additiv für die Abgasreinigung besonders wenig anfällig für die Temperatur als Quereinfluss auf die Dosiergenauigkeit.

**Bezugszeichenliste**

| | |
|---|---|
| 1 | Pumpe |
| 2 | Pumpengehäuse |
| 3 | Einlass |
| 4 | Auslass |
| 5 | Exzenter |
| 6 | Außenfläche |
| 7 | verformbares Element |
| 8 | Förderkanal |
| 9 | verschiebbare Abdichtung |
| 10 | Pumpenvolumen |
| 11 | Pumpenspalt |
| 12 | Kraftfahrzeug |
| 13 | Innenumfangsfläche |
| 14 | Abschnitt |
| 15 | Verbrennungskraftmaschine |
| 16 | Abgasbehandlungsvorrichtung |
| 17 | SCR-Katalysator |
| 18 | Tank |
| 19 | Ausbuchtung |
| 20 | Dichtlippe |
| 21 | ringförmiger Abdichtkontakt |
| 22 | Zentrierungsring |
| 23 | geometrische Achse |
| 24 | axiale Richtung |
| 25 | radiale Richtung |
| 26 | Umfangsrichtung |
| 27 | Abdichtelement |
| 28 | Versteifungsring |
| 29 | Kompensationselement |
| 30 | Exzentrizität |
| 31 | Abdichtwinkel |
| 32 | halber Abdichtwinkel |
| 33 | Abdichtposition |
| 34 | dritter Durchmesser |
| 35 | Abdichtelementdicke |
| 36 | Stauchung |
| 37 | minimale Kompensationselementdicke |
| 38 | maximale Kompensationselementdicke |
| 39 | Exzenterdurchmesser |
| 40 | Elementdicke |
| 41 | erster Außendurchmesser |
| 42 | Ringdicke |
| 43 | Leitung |
| 44 | Injektor |
| 45 | Antriebsachse |
| 46 | innerer Exzenterbereich |
| 47 | Exzenterlager |
| 48 | äußerer Ring |
| 49 | stationäre Abdichtung |
| 50 | Stift |
| 51 | Achsenlager |
| 52 | zweiter Außendurchmesser |

53 Förderrichtung
54 Mittelebene

## Patentansprüche

1. Pumpe (1) zur Förderung einer Flüssigkeit, aufweisend zumindest ein Pumpengehäuse (2) mit mindestens einem Einlass (3) und mindestens einem Auslass (4), mit einer Innenumfangsfläche (13) und einer geometrischen Achse (23), wobei innerhalb des Pumpengehäuses (2) ein Exzenter (5) angeordnet ist und der Exzenter (5) um die geometrische Achse (23) relativ zu dem Pumpengehäuse (2) exzentrisch bewegbar ist, wobei in einem Pumpenspalt (11) zwischen der Innenumfangsfläche (13) des Pumpengehäuses (2) und einer Außenfläche (6) des Exzenters (5) ein verformbares Element (7) angeordnet ist und wobei mit dem verformbaren Element (7) und der Innenumfangsfläche (13) des Pumpengehäuses (2) ein Förderkanal (8) von dem mindestens einen Einlass (3) zu dem mindestens einen Auslass (4) ausgebildet ist und wobei weiter das verformbare Element (7) von der Außenfläche (6) des Exzenters (5) entlang mindestens eines Abschnitts (14) des Förderkanals (8) derart gegen das Pumpengehäuse (2) gedrückt wird, dass mindestens eine verschiebbare Abdichtung (9) des Förderkanals (8) und zumindest ein geschlossenes Pumpenvolumen (10) in dem Förderkanal (8) ausgebildet sind, die zur Förderung der Flüssigkeit durch eine Bewegung des Exzenters (5) entlang des Förderkanals (8) von dem Einlass (3) zu dem Auslass (4) verschiebbar sind, wobei die Pumpe (1) einen Versteifungsring (28) an dem verformbaren Element (7) aufweist, **dadurch gekennzeichnet, dass** ein erster Wärmeausdehnungskoeffizient des Versteifungsrings (28) kleiner ist als ein dritter Wärmeausdehnungskoeffizienten des Pumpengehäuses (2).

2. Pumpe (1) nach Patentanspruch 1, wobei der erste Wärmeausdehnungskoeffizient des Versteifungsrings (28) weniger als 66 % des dritten Wärmeausdehnungskoeffizienten des Pumpengehäuses (2) beträgt.

3. Pumpe (1) nach einem der vorhergehenden Patentansprüche, wobei das Pumpengehäuse (2) aus einem Kunststoffmaterial und der Versteifungsring (28) aus einem metallischen Werkstoff bestehen.

4. Pumpe (1) nach einem der Patentansprüche 1 bis 3, wobei der Versteifungsring (28) in das verformbare Element (7) integriert ist und wobei das verformbare Element (7) außen an dem Versteifungsring (28) ein ringförmiges flexibles Abdichtelement (27) und innen an dem Versteifungsring (28) ein ringförmiges elastisches Kompensationselement (29) aufweist.

5. Pumpe (1) nach einem der Patentansprüche 1 bis 3, wobei das verformbare Element (7) ein verformbares Abdichtelement (27) ist, an welchem der Versteifungsring (28) innen anliegt, wobei zwischen dem Versteifungsring (28) und dem Exzenter (5) ein elastisches Kompensationselement (29) angeordnet ist.

6. Pumpe (1) nach Patentanspruch 4 oder 5, wobei das Abdichtelement (27) einen ersten Elastizitätsmodul und das Kompensationselement (29) einen zweiten Elastizitätsmodul hat, wobei der zweite Elastizitätsmodul mindestens doppelt so groß ist wie der erste Elastizitätsmodul.

7. Pumpe (1) nach einem der vorhergehenden Patentansprüche, wobei der Versteifungsring (28) einen dritten Elastizitätsmodul hat, der mindestens doppelt so groß ist wie ein zweiter Elastizitätsmodul eines Kompensationselementes (29) zwischen dem Versteifungsring (28) und dem Exzenter (5).

8. Pumpe (1) nach einem der vorhergehenden Patentansprüche, wobei die Pumpe (1) so ausgelegt ist, dass eine Stauchung (36) des verformbaren Elements (7) im Bereich der verschiebbaren Abdichtung (9) maximal 5 % einer Elementdicke (40) des verformbaren Elements (7) entspricht.

9. Pumpe (1) nach einem der vorhergehenden Patentansprüche, wobei die verschiebbare Abdichtung (9) an der Innenumfangsfläche (13) des Pumpengehäuses (2) in einem Abdichtwinkel (31) um die geometrische Achse (23) anliegt, wobei der Abdichtwinkel (31) mindestens 90° beträgt.

10. Pumpe (1) nach einem der vorhergehenden Patentansprüche, wobei der Versteifungsring (28) einen ersten Wärmeausdehnungskoeffizienten $\lambda_1$ und einen ersten Außendurchmesser $D_1$ (41), das verformbare Element (7) einen zweiten Wärmeausdehnungskoeffizienten $\lambda_2$ und einen zweiten Außendurchmesser $D_2$ (52) und das Pumpengehäuse (2) einen dritten Durchmesser $D_3$ (34) und einen dritten Wärmeausdehnungskoeffizienten $\lambda_3$ aufweisen, wobei der erste Außendurchmesser $D_1$ (41) des Versteifungsrings (28) nach folgender Formel ausgelegt ist:

$$D_1 = \frac{D_3 \times \lambda_3 - D_2 \times \lambda_2}{\lambda_1 - \lambda_2}$$

11. Pumpe (1) nach einem der vorhergehenden Patentansprüche, wenn das verformbare Element (7) in axialer Richtung (24) beidseitig des Exzenters (5)

weist.

jeweils von einem Zentrierungsring (22) an der Innenumfangsfläche (13) des Pumpengehäuses (2) abgestützt ist und so gegen das Pumpengehäuse (2) gedrückt wird, dass jeweils ein ringförmiger Abdichtkontakt (21) gebildet ist.

12. Kraftfahrzeug (12), aufweisend eine Verbrennungskraftmaschine (15), eine Abgasbehandlungsvorrichtung (16) zur Reinigung der Abgase der Verbrennungskraftmaschine (15) mit einem SCR-Katalysator (17), mit dem das SCR-Verfahren durchgeführt werden kann, wobei dem SCR-Katalysator (17) eine Flüssigkeit zur Abgasreinigung mit einer Pumpe (1) gemäß einem der vorhergehenden Ansprüche zugeführt wird.

## Claims

1. Pump (1) for delivering a liquid, having at least one pump housing (2) with at least one inlet (3) and at least one outlet (4), having an inner circumferential face (13) and having a geometric axis (23), wherein an eccentric (5) is arranged within the pump housing (2) and the eccentric (5) is movable in eccentric fashion relative to the pump housing (2) about the geometric axis (23), wherein a deformable element (7) is arranged in a pump gap (11) between the inner circumferential face (13) of the pump housing (2) and an outer face (6) of the eccentric (5), and wherein a delivery duct (8) is formed from the at least one inlet (3) to the at least one outlet (4) by the deformable element (7) and by the inner circumferential face (13) of the pump housing (2), and wherein furthermore, the deformable element (7) is pressed against the pump housing (2) along at least one section (14) of the delivery duct (8) by the outer face (6) of the eccentric (5) such that at least one displaceable seal (9) of the delivery duct (8) and at least one closed pump volume (10) are formed in the delivery duct (8), these being displaceable along the delivery duct (8) from the inlet (3) to the outlet (4) by means of a movement of the eccentric (5) for the delivery of the liquid, wherein the pump (1) has a stiffening ring (28) on the deformable element (7), **characterized in that** a first coefficient of thermal expansion of the stiffening ring (28) is lower than a third coefficient of thermal expansion of the pump housing (2).

2. Pump (1) according to Patent Claim 1, wherein the first coefficient of thermal expansion of the stiffening ring (28) amounts to less than 66% of the third coefficient of thermal expansion of the pump housing (2).

3. Pump (1) according to one of the preceding patent claims, wherein the pump housing (2) is composed of a plastics material and the stiffening ring (28) is composed of a metallic material.

4. Pump (1) according to one of Patent Claims 1 to 3, wherein the stiffening ring (28) is integrated into the deformable element (7), and wherein the deformable element (7) has, on the outside of the stiffening ring (28), an annular flexible sealing element (27), and, on the inside of the stiffening ring (28), an annular elastic compensation element (29).

5. Pump (1) according to one of Patent Claims 1 to 3, wherein the deformable element (7) is a deformable sealing element (27), against the inside of which the stiffening ring (28) bears, wherein an elastic compensation element (29) is arranged between the stiffening ring (28) and the eccentric (5).

6. Pump (1) according to Patent Claim 4 or 5, wherein the sealing element (27) has a first modulus of elasticity and the compensation element (29) has a second modulus of elasticity, wherein the second modulus of elasticity is at least twice the first modulus of elasticity.

7. Pump (1) according to one of the preceding patent claims, wherein the stiffening ring (28) has a third modulus of elasticity which is at least twice a second modulus of elasticity of a compensation element (29) between the stiffening ring (28) and the eccentric (5).

8. Pump (1) according to one of the preceding patent claims, wherein the pump (1) is designed such that a compression (36) of the deformable element (7) in the region of the displaceable seal (9) corresponds to at most 5% of an element thickness (40) of the deformable element (7).

9. Pump (1) according to one of the preceding patent claims, wherein the displaceable seal (9) bears against the inner circumferential face (13) of the pump housing (2) over a sealing angle (31) about the geometric axis (23), wherein the sealing angle (31) amounts to at least 90°.

10. Pump (1) according to one of the preceding patent claims, wherein the stiffening ring (28) has a first coefficient of thermal expansion $\lambda_1$ and a first outer diameter $D_1$ (41), the deformable element (7) has a second coefficient of thermal expansion $\lambda_2$ and a second outer diameter $D_2$ (52), and the pump housing (2) has a third diameter $D_3$ (34) and a third coefficient of thermal expansion $\lambda_3$, wherein the first outer diameter $D_1$ (41) of the stiffening ring (28) is configured in accordance with the following formula:

$$D_1 = \frac{D_3 \times \lambda_3 - D_2 \times \lambda_2}{\lambda_1 - \lambda_2}$$

**11.** Pump (1) according to one of the preceding patent claims, wherein the deformable element (7) is supported, on both sides of the eccentric (5) in the axial direction (24), on the inner circumferential face (13) of the pump housing (2) by a respective centring ring (22), and is pressed against the pump housing (2) such that an annular contact seal (21) is formed in each case.

**12.** Motor vehicle (12) having an internal combustion engine (15) and having an exhaust-gas treatment device (16) for the purification of the exhaust gases of the internal combustion engine (15), which exhaust-gas treatment device has an SCR catalytic converter (17) with which the SCR process can be performed, wherein a liquid for exhaust-gas purification is fed to the SCR catalytic converter (17) by means of a pump (1) according to one of the preceding claims.

**Revendications**

**1.** Pompe (1) destinée à transporter un liquide, comportant au moins un boîtier de pompe (2) avec au moins une entrée (3) et au moins une sortie (4), avec une surface circonférentielle intérieure (13) et un axe géométrique (23), dans laquelle un excentrique (5) est disposé à l'intérieur du boîtier de pompe (2) et l'excentrique (5) est déplaçable de façon excentrique par rapport au boîtier de pompe (2) autour de l'axe géométrique (23), dans laquelle un élément déformable (7) est disposé dans une fente de pompe (11) entre la surface circonférentielle intérieure (13) du boîtier de pompe (2) et une surface extérieure (6) de l'excentrique (5) et dans laquelle un canal de transport (8) allant de l'au moins une entrée (3) vers l'au moins une sortie (4) est formé avec l'élément déformable (7) et la surface circonférentielle intérieure (13) du boîtier de pompe (2), et dans laquelle en outre l'élément déformable (7) est poussé contre le boîtier de pompe (2) à partir de la surface extérieure (6) de l'excentrique (5) le long d'au moins une section (14) du canal de transport (8) de manière à former au moins un joint d'étanchéité déplaçable (9) du canal de transport (8) et au moins un volume de pompe fermé (10) dans le canal de transport (8), lesquels peuvent être déplacés par un mouvement de l'excentrique (5) le long du canal de transport (8) de l'entrée (3) vers la sortie (4) pour le transport du liquide, la pompe (1) présentant un anneau de renfort (28) sur l'élément déformable (7), **caractérisée en ce qu'**un premier coefficient de dilatation thermique de l'anneau de renfort (28) est inférieur à un troisième coefficient de dilatation thermique du boîtier de pompe (2) .

**2.** Pompe (1) selon la revendication 1, dans laquelle le premier coefficient de dilatation thermique de l'anneau de renfort (28) représente moins de 66% du troisième coefficient de dilatation thermique du boîtier de pompe (2) .

**3.** Pompe (1) selon l'une des revendications précédentes, dans laquelle le boîtier de pompe (2) est constitué d'une matière plastique et l'anneau de renfort (28) est constitué d'un matériau métallique.

**4.** Pompe (1) selon l'une des revendications 1 à 3, dans laquelle l'anneau de renfort (28) est intégré dans l'élément déformable (7) et dans laquelle l'élément déformable (7) présente un élément d'étanchéité souple annulaire (27) à l'extérieur sur l'anneau de renfort (28) et un élément de compensation élastique annulaire (29) à l'intérieur sur l'anneau de renfort (28).

**5.** Pompe (1) selon l'une des revendications 1 à 3, dans laquelle l'élément déformable (7) est un élément d'étanchéité déformable (27), sur lequel s'applique intérieurement l'anneau de renfort (28), dans laquelle un élément de compensation élastique (29) est disposé entre l'anneau de renfort (28) et l'excentrique (5).

**6.** Pompe (1) selon la revendication 4 ou 5, dans laquelle l'élément d'étanchéité (27) présente un premier module d'élasticité et l'élément de compensation (29) présente un deuxième module d'élasticité, le deuxième module d'élasticité étant au moins deux fois plus élevé que le premier module d'élasticité.

**7.** Pompe (1) selon l'une des revendications précédentes, dans laquelle l'anneau de renfort (28) présente un troisième module d'élasticité, lequel est au moins deux fois plus élevé qu'un deuxième module d'élasticité d'un élément de compensation (29) entre l'anneau de renfort (28) et l'excentrique (5).

**8.** Pompe (1) selon l'une des revendications précédentes, dans laquelle la pompe (1) est conçue de telle façon qu'un écrasement (36) de l'élément déformable (7) dans la région du joint d'étanchéité déplaçable (9) correspond au maximum à 5% d'une épaisseur d'élément (40) de l'élément déformable (7).

**9.** Pompe (1) selon l'une des revendications précédentes, dans laquelle le joint d'étanchéité déplaçable (9) s'applique sur la surface circonférentielle intérieure (13) du boîtier de pompe (2) selon un angle d'étanchéité (31) autour de l'axe géométrique (23), l'angle d'étanchéité (31) mesurant au moins 90°.

**10.** Pompe (1) selon l'une des revendications précédentes, dans laquelle l'anneau de renfort (28) présente un premier coefficient de dilatation thermique $\lambda_1$ et un premier diamètre extérieur $D_1$ (41), l'élément dé-

formable (7) présente un deuxième coefficient de dilatation thermique $\lambda_2$ et un deuxième diamètre extérieur $D_2$ (52), et le boîtier de pompe (2) présente un troisième diamètre $D_3$ (34) et un troisième coefficient de dilatation thermique $\lambda_3$, le premier diamètre extérieur $D_1$ (41) de l'anneau de renfort (28) étant conçu selon la formule suivante :

$$D_1 = \frac{D_3 \times \lambda_3 - D_2 \times \lambda_2}{\lambda_1 - \lambda_2}$$

11. Pompe (1) selon l'une des revendications précédentes, en ce qu'un contact d'étanchéité annulaire (21) est formé respectivement lorsque l'élément déformable (7) s'appuie respectivement par le biais d'une bague de centrage (22) sur la surface circonférentielle intérieure (13) du boîtier de pompe (2) dans la direction axiale (24) de part et d'autre de l'excentrique (5), tout en étant ainsi poussé contre le boîtier de pompe (2).

12. Véhicule automobile (12) comportant un moteur à combustion interne (15), un dispositif de traitement du gaz d'échappement (16) pour la purification du gaz d'échappement du moteur à combustion interne (15) avec un catalyseur SCR (17) permettant d'exécuter le procédé SCR, dans lequel un liquide de purification du gaz d'échappement est alimenté au catalyseur SCR (17) à l'aide d'une pompe (1) selon l'une des revendications précédentes.

**Fig. 1**

**Fig. 2**

B-B

**Fig. 3**

A-A

**Fig. 4**

**Fig. 5**

Fig. 6

Fig. 7

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2544628 A
- US 3408947 A
- DE 2853916 A1
- DE 3815252 A1
- EP 819853 A2